(19) **Europäisches Patentamt**
**European Patent Office**
**Office européen des brevets**

(11) **EP 4 582 195 A1**

(12) **EUROPEAN PATENT APPLICATION**
published in accordance with Art. 153(4) EPC

(43) Date of publication:
**09.07.2025 Bulletin 2025/28**

(21) Application number: **23860458.1**

(22) Date of filing: **30.08.2023**

(51) International Patent Classification (IPC):
**B21D 39/00** (2006.01)    **F16B 37/04** (2006.01)

(52) Cooperative Patent Classification (CPC):
**B21D 39/00; F16B 37/04**

(86) International application number:
**PCT/JP2023/031658**

(87) International publication number:
**WO 2024/048696 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022 JP 2022137375**

(71) Applicant: **Shinjo Holdings Co., Ltd.
Osaka 557-0034 (JP)**

(72) Inventors:
• **HORI, Shota**
**Kishiwada-shi Osaka 596-0011 (JP)**
• **NISHIMURA, Rikiya**
**Kishiwada-shi Osaka 596-0011 (JP)**
• **NAKA, Daisuke**
**Kishiwada-shi Osaka 596-0011 (JP)**

(74) Representative: **Betten & Resch
Patent- und Rechtsanwälte PartGmbB
Maximiliansplatz 14
80333 München (DE)**

(54) **PIERCE NUT**

(57)    A pierce nut includes a main body, a plateau portion, and a pilot portion.

The plateau portion is provided around the center of a flat surface of the main body and has a thin-plate shape. The pilot portion protrudes in an extending direction, around the center of a terrace surface of the plateau portion. The terrace surface of the plateau portion is formed to be raised from the flat surface. A gap (16, 116, 216) is formed around a neck portion (15, 115, 215) between the plateau portion and the pilot portion, due to connection between an outer circumference surface (32, 132) of the pilot portion and the terrace surface of the plateau portion through the neck portion (15, 115, 215). On a first intersection plane (PL11, PL21) intersecting the extending direction, the pilot portion has a first cross-sectional shape with n corners, n being a natural number that is equal to or larger than 4.

**FIG. 5**

## Description

Technical Field

The present invention relates to a pierce nut.

Background Art

A_pierce nut having a pilot portion with an outer circumference surface provided with a recess groove is known (see, for example, Patent Literature 1).

Patent Literature 1: Japanese Patent No. 5300027.

In this pierce nut disclosed in Patent Literature 1, the recess groove provided in the outer circumference surface of the pilot portion is mainly used to bring out pullout resistance and rotational resistance of the pierce nut secured to a metal plate

However, manufacturing a pierce nut with such a recess groove requires the preparation of a mold with a complex shape. Consequently, the frequency of mold breakage during pierce nut production increases, leading to higher manufacturing costs.

It is an object of the present invention to provide a pierce nut that can be securely attached to a plate material even when a simple shape is adopted.

Solution to Problem

In order to solve the above-described problems, a pierce nut according to a first aspect includes main body, a plateau portion, and a pilot portion. The plateau portion is provided around a center of a flat surface of the main body and has a thin-plate shape. The pilot portion protrudes in an extending direction , around a center of a terrace surface of the plateau portion . The terrace surface of the plateau portion is formed to be raised from the flat surface . A gap is formed around a neck portion between the plateau portion and the pilot portion , due to connection between an outer circumference surface of the pilot portion and the terrace surface of the plateau portion through the neck portion . On a first intersection plane intersecting the extending direction , the pilot portion has a first cross-sectional shape with n corners, n being a natural number that is equal to or larger than 4. On a second intersection plane intersecting the extending direction , the plateau portion has a second cross-sectional shape with m corners, m being a natural number that is equal to or larger than 5 and is different from n. The pilot portion has an outer circumference line on the first intersection plane , with a length of the outer circumference line being longer on the first intersection plane closer to a distal end surface of the pilot portion and farther from the terrace surface. With (i) an intersecting point between a half-line extending along the terrace surface from the axis of the pilot portion and the outer circumference surface defined as a first intersecting point , (ii) an intersecting point between the half-line and an outermost circumference of the terrace surface defined as a second intersecting point , and (iii) a length of a line segment connecting the first intersecting point and the second intersecting point defined as a gap length, the half-line varies among rotational positions around the axis leading to variation in the gap length among the rotational positions.

A pierce nut according to a second aspect includes a main body, a plateau portion, and a pilot portion. The plateau portion is provided around a center of a flat surface of the main body and has a thin-plate shape. The pilot portion that protrudes in an extending direction , around a center of a terrace surface of the plateau portion. The terrace surface of the plateau portion is formed to be raised from the flat surface. A gap is formed around a neck portion between the plateau portion and the pilot portion , due to connection between an outer circumference surface of the pilot portion and the terrace surface of the plateau portion through the neck portion. On a first intersection plane intersecting the extending direction , the pilot portion has a first cross-sectional shape with n corners, n being a natural number that is equal to or larger than 4. On a second intersection plane intersecting the extending direction , the plateau portion has a second cross-sectional shape with m corners, m being a natural number that is equal to or larger than 5 and different from n. The pilot portion has an outer circumference line on the first intersection plane , with a length of the outer circumference line being longer on the first intersection plane closer to a distal end surface ) of the pilot portion and farther from the terrace surface. With (i) an intersecting point between a half-line extending along the terrace surface from the axis of the pilot portion and the outer circumference surface defined as a first intersecting point , (ii) an intersecting point between the half-line and an outermost circumference of the terrace surface defined as a second intersecting point , (iii) a length of a line segment connecting the first intersecting point and the second intersecting point defined as the gap length , and (iv) a length of a line segment connecting the axis and the first intersecting point defined as a pilot diameter, the half-line varies among rotational positions around the axis leading to variation in the gap length and the pilot diameter among the rotational positions, as well as a change in position of the gap among the corresponding rotational positions.

A pierce nut according to a third aspect includes a main body, a plateau portion, and a pilot portion. The plateau portion that is provided around a center of a flat surface of the main body and has a thin-plate shape. The pilot portion that protrudes in an extending direction , around a center of a terrace surface of the plateau portion. The terrace surface of the plateau portion is formed to be raised from the flat surface. A gap is formed around a neck portion , due to connection between an outer circumference surface of the pilot portion and the terrace surface of the plateau portion through the neck portion between the plateau portion and the pilot portion. On a first intersection plane intersecting the extending direction , the pilot portion has a first cross-sectional shape with n corners, n being a natural number that is equal to or larger than 4. On a second intersection plane intersecting the extending direction , the plateau portion has a second cross-sectional shape with m corners, m being a natural number that is equal to or larger than 5 and different from n. The pilot portion has an outer circumference line on the first intersection plane , with a length of the outer circumference line being longer on the first intersection plane closer to a distal end surface of the pilot portion and farther from the terrace surface. The pilot portion intersecting the terrace surface has a third cross-sectional shape surrounded by an outermost circumference of the terrace surface.

In a pierce nut according to a fourth aspect, according to the pierce nut of one of the first to third aspects, on a cross section including the axis of the pilot portion , the outer circumference surface and the terrace surface form an inclination angle of 65 to 80 degrees.

In a pierce nut according to a fifth aspect, according to the pierce nut of one of the first to fourth aspects, the following formula (C1) is satisfied.

$$m = 2n \ldots (C1)$$

Effects of Invention

In the pierce nut according to the first to fifth aspect, on a first intersection plane intersecting the extending direction, the pilot portion has a first cross-sectional shape with n corners (n is a natural number that is equal to or larger than 4). On a second intersection plane intersecting the extending direction, the plateau portion has a second cross-sectional shape with m corners (m is a natural number that is equal to or larger than 5 and is different from n).

This ensures that when the angle position of the half-line extending from the axis of the pilot portion along the terrace surface is changed around the axis, the gap length at each angle position can be changed. Consequently, the rotational resistance and pullout resistance of the pierce nut attached to the plate material can be improved without making the shape of the outer circumference surface of the pilot portion complex, such as a shape with depressions and protrusions.

In particular, in the pierce nut according to the fourth aspect, the inclination angle formed between the outer circumference surface and the terrace surface on a cross-section including the axis of the pilot portion is said to be 65 to 80 degrees. This ensures that a gap (depression) to securely guide the plate material can be formed around a neck portion between the plateau portion and the pilot portion. Consequently, the rotational resistance and pullout resistance of the pierce nut attached to the plate material can be further improved.

Brief Description of Drawings

FIG. 1 is a perspective view illustrating an example of a configuration of a pierce nut of a first embodiment of the present invention;
FIG. 2 is a front view illustrating an example of a configuration of the pierce nut of the first embodiment of the present invention;
FIG. 3 is a plan view illustrating an example of a configuration of pierce nuts of first to third embodiments of the present invention;
FIG. 4 is a bottom view illustrating an example of a configuration of the pierce nut of the first embodiment of the present invention;
FIG. 5 is a cross-sectional view illustrating an example of a configuration of the pierce nut taken and viewed along line A-A in FIG. 2;
FIG. 6 is a cross-sectional view illustrating an example of a configuration of the pierce nut taken and viewed along each of line B-B in FIG. 2 and line H-H in FIG. 17;
FIG. 7 is a cross-sectional view illustrating an example of a configuration of the pierce nut taken and viewed along line C-C in FIG. 3;
FIG. 8 is a cross-sectional view illustrating an example of a configuration of the pierce nut taken and viewed along line D-D in FIG. 5;
FIG. 9 is a diagram illustrating a method of securing the pierce nut;
FIG. 10 is a diagram illustrating a method of securing the pierce nut;
FIG. 11 is a perspective view illustrating an example of a configuration of the pierce nut according to the second embodiment of the present invention;
FIG. 12 is a front view illustrating an example of a configuration of the pierce nut according to the second embodiment of the present invention;
FIG. 13 is a bottom view illustrating an example of a configuration of the pierce nut according to the second embodiment of the present invention;
FIG. 14 is a cross-sectional view illustrating an example of a configuration of the pierce nut taken and viewed along line E-E in FIG. 12;
FIG. 15 is a cross-sectional view illustrating an example of a configuration of the pierce nut taken and viewed along line F-F in FIG. 12;
FIG. 16 is a perspective view illustrating an example of a configuration of the pierce nut of the third embodiment of the present invention;
FIG. 17 is a front view illustrating an example of a configuration of the pierce nut of the third embodiment of the present invention;
FIG. 18 is a bottom view illustrating an example of a configuration of the pierce nut of the third embodiment of the present invention; and
FIG. 19 is a cross-sectional view illustrating an example of a configuration of the pierce nut taken and viewed along line G-G in FIG. 17.

The embodiments of the present invention will now be described with reference to the accompanying drawings.

<1. First embodiment>

<1.1. Configuration of pierce nut>

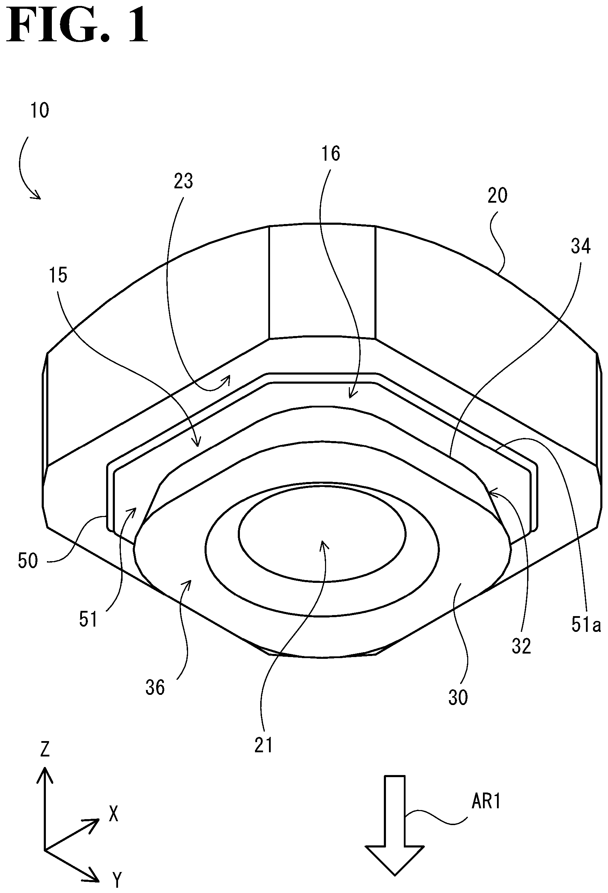

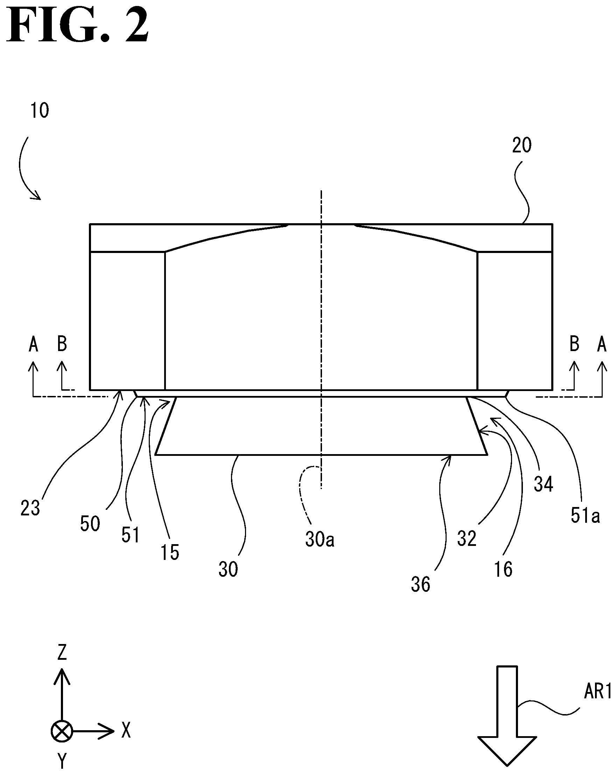

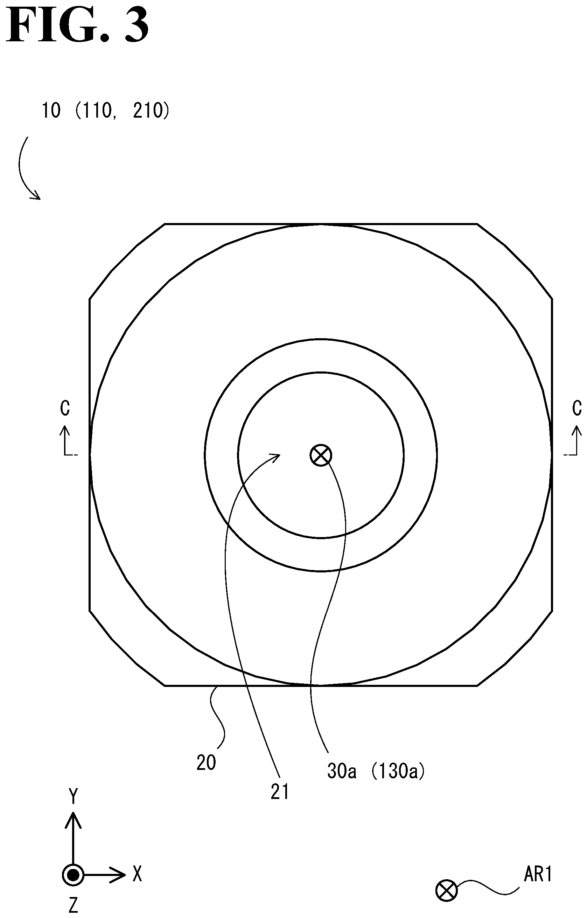

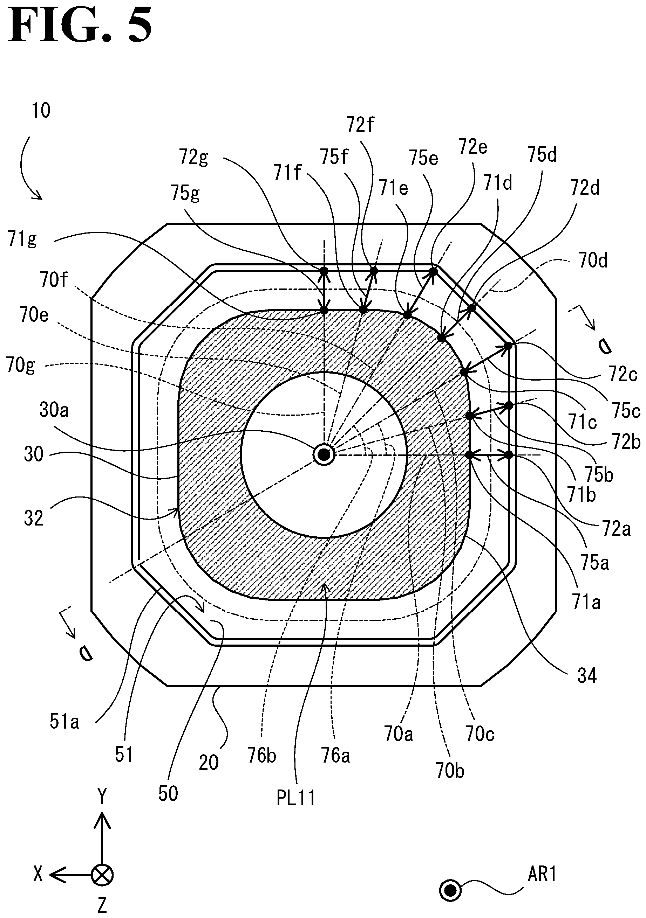

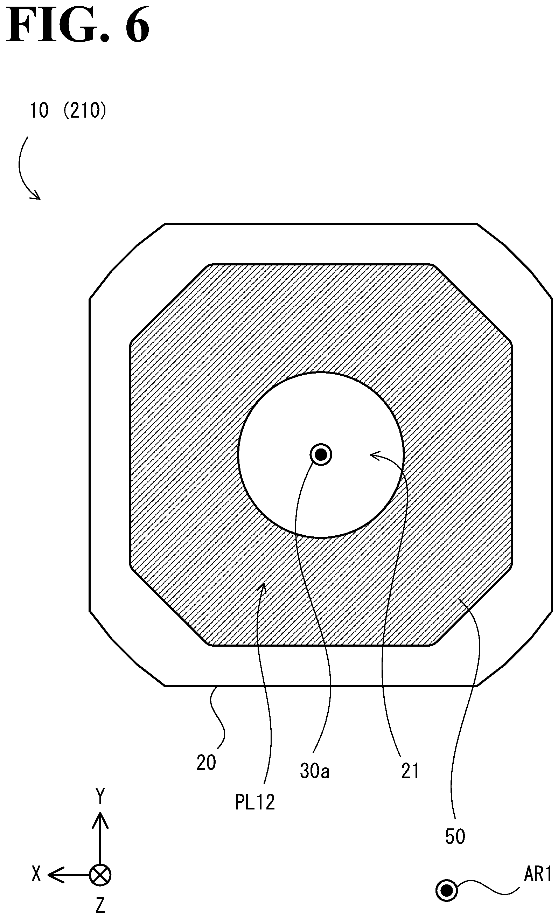

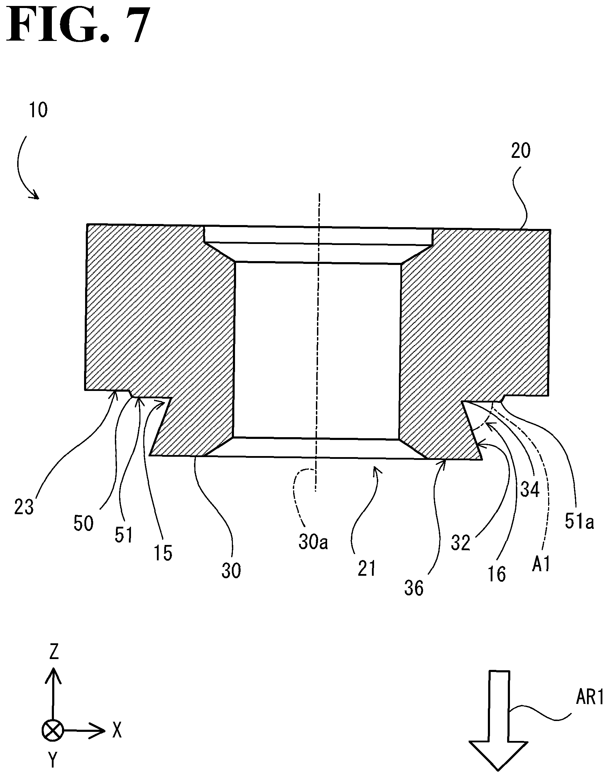

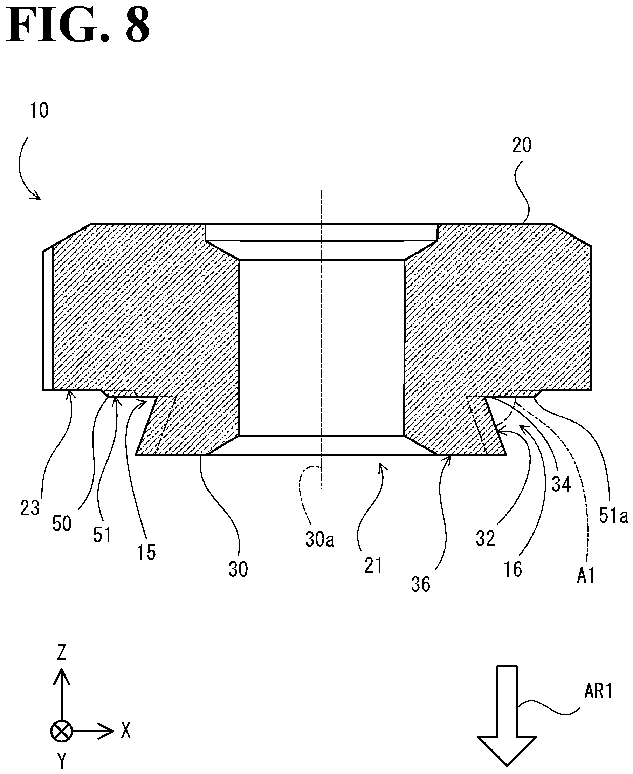

FIG. 1 to FIG. 4 are respectively a perspective view, a front view, a plan view, and a bottom view illustrating an example of a configuration of a pierce nut 10 according to a first embodiment of the present invention. FIG. 5 is a cross-sectional view illustrating an example of a configuration of the pierce nut 10 taken and viewed along line A-A in FIG. 2. FIG. 6 is a cross-sectional view illustrating an example of a configuration of the pierce nut 10 taken and viewed along line B-B in FIG. 2. FIG. 7 is a cross-sectional view illustrating an example of a configuration of the pierce nut 10 taken and viewed along line C-C in FIG. 3. FIG. 8 is a cross-sectional view illustrating an example of a configuration of the pierce nut 10 taken and viewed along line D-D in FIG. 5.

Here, the pierce nut 10 is a nut secured to a plate material such as a steel plate in response to pressure applied. As illustrated in FIG. 1 to FIG. 8, the pierce nut 10 mainly includes a main body 20, a pilot portion 30, and a plateau portion 50.

An XYZ orthogonal coordinate system defining the vertical direction with a Z axis direction and the horizontal plane with an XY plane is provided in FIG. 1 and the following figures as appropriate for better understanding of components illustrated in the figures.

The main body 20 is a rectangular parallelepiped body having a through hole 21 formed. For example, as illustrated in FIG. 3, the main body 20 has a generally square shape in plan view. As illustrated in FIG. 7 and FIG. 8, the through hole 21 formed in the main body 20 extends in a direction of an axis 30a of the pilot portion 30, and is used as a screw hole.

The pilot portion 30 is a tool that can punch a hole in a plate material made of metal such as a steel plate in response to pressure applied in the direction of the axis 30a. As illustrated in FIG. 1 and FIG. 2, the pilot portion 30 protrudes in a direction of an arrow AR1 (hereinafter, a direction parallel to each of the arrow AR1 (Z AXIS) and the axis 30a is also simply referred to as "extending direction AR1"), around the center of a terrace surface 51 of the plateau portion 50. As illustrated in FIG. 1, FIG. 7, and FIG. 8, the through hole 21 is formed at the center of the pilot portion 30, as in the main body 20.

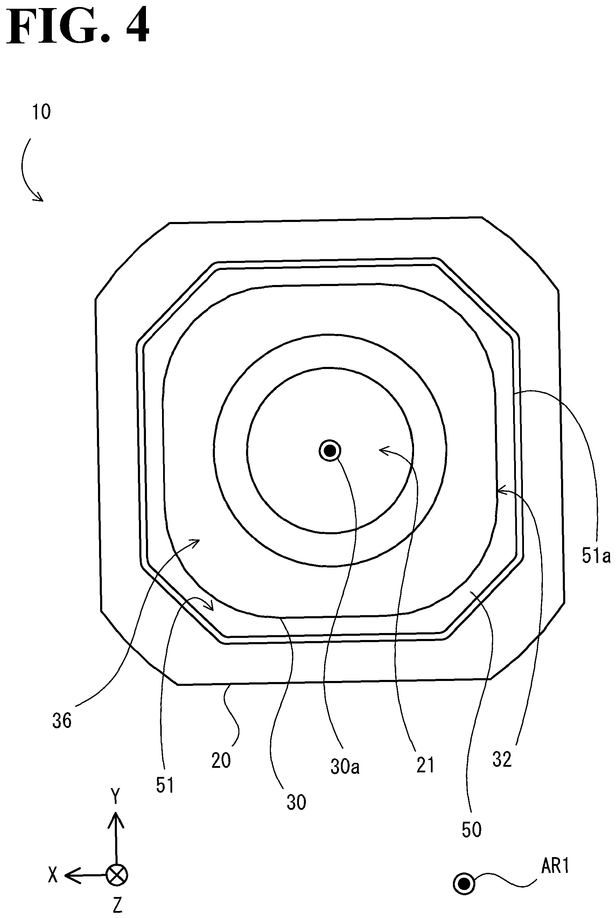

As illustrated in FIG. 1, FIG. 2, and FIG. 4, the pilot portion 30 has an outer shape of a truncated pyramid protruding outward from the main body 20. As illustrated in FIG. 5, for example, the pilot portion 30 has a rectangular cross-sectional shape (first cross-sectional shape) on a first intersection plane PL11 intersecting the extending direction AR1. A two-dot chain line in FIG. 5 indicates an outline of a distal end surface 36 (see FIG. 4) of the pilot portion 30 in bottom view.

As illustrated in FIG. 1 and FIG. 2, an outer circumference length of the pilot portion 30 in a direction (a direction parallel to the first intersection plane PL11 in FIG. 5 for example) intersecting the extending direction AR1 increases toward the distal end surface 36 of the pilot portion 30 from the terrace surface 51.

The plateau portion 50 has a shape of a plate thinner than the main body 20 and is provided around the center of a flat surface 23 of the main body 20. As illustrated in FIG. 1 and FIG. 2, the terrace surface 51 serving as the main surface of the plateau portion 50 is formed to be raised from the flat surface 23 of the main body 20. As illustrated in FIG. 7 and FIG. 8, the through hole 21 is formed at the center of the plateau portion 50, as in the main body 20 and the pilot portion 30.

As illustrated in FIG. 1 and FIG. 2, the plateau portion 50 is formed to surround an end portion (neck portion 15) of the pilot portion 30 on the flat surface 23 side. More specifically, as illustrated in FIG. 5, the pilot portion 30 intersecting the terrace surface 51 on the first intersection plane PL11 has a cross-sectional shape (third cross-sectional shape) surrounded by an outermost circumference 51a of the terrace surface 51.

With the outer circumference surface 32 of the pilot portion 30 and the terrace surface 51 of the plateau portion 50 thus connected through the neck portion 15 between the plateau portion 50 and the pilot portion 30, a gap 16 is formed around the neck portion 15.

As illustrated in FIG. 2, the terrace surface 51 is formed to be parallel to the flat surface 23 of the main body 20. As illustrated in FIG. 6, the plateau portion 50 has an octagonal cross-sectional shape (second cross-sectional shape) taken along a second intersection plane PL12, on the second intersection plane PL12 intersecting the extending direction AR1.

As illustrated in FIG. 7 and FIG. 8, on a cross section including the axis 30a of the pilot portion 30 (specifically, a portion in FIG. 7 and FIG. 8 hatched with diagonal lines rising to the right), an inclination angle A1 between the outer circumference surface 32 of the pilot portion 30 and the terrace surface 51 of the plateau portion 50 is 65 to 80 degrees (preferably, 70 to 75 degrees).

<1.2. Gap length at each rotational position>

Now, how a gap length 75 (75a to 75g) varies between rotational positions (for example, angles 76a and 76b in FIG. 5) will be described with reference to FIG. 5, FIG. 7, and FIG. 8.

Here, as illustrated in FIG. 5,

(1) an intersecting point between a half-line 70 (70a to 70g) extending along the terrace surface 51 from the axis 30a of the pilot portion 30 and the outer circumference surface 32 of the pilot portion 30 is defined as a first intersecting point 71 (71a to 71g), (2) an intersecting point between the half-line 70 (70a to 70g) and the outermost circumference 51a of the terrace surface 51 is defined as a second intersecting point 72 (72a to 72g), (3) the length of a line segment connecting the first intersecting point 71 (71a to 71g) and the corresponding second intersecting point 72 (72a to 72g) is defined as the gap length 75 (75a to 75g), (4) the length of a line segment connecting the axis 30a and the first intersecting point 71 (71a to 71g) is defined as a pilot diameter, and (5) a half-line serving as a reference for a rotational position (angle) around the axis 30a is defined as a half-line 70a.

In this case, the half-lines 70 (70a to 70g) radially extend from the axis 30a. The half-line 70 (70a to 70g) varies among the rotational positions around the axis 30a, leading to variation in the gap length 75 (75a to 75g) among the rotational positions.

For example, as illustrated in FIG. 5, comparison between the gap length 75c on the half-line 70c at the rotational position corresponding to the angle 76a (that is, the angle formed between the half-line 70a and the half-line 70c) and the gap length 75d on the half-line 70d at the rotational position corresponding to the angle 76b, indicates that the gap length 75 decreases from the rotational position corresponding to the angle 76a to the rotational position corresponding to the angle 76b.

The gap lengths 75 (75a to 75g) at the respective rotational positions are alternatively observed as follows. Specifically, variation in the half-line 70 (70a to 70g) among the rotational positions around the axis 30a leads to variation in the gap length 75 (75a to 75g) and pilot diameter among the rotational positions (see FIG. 5), as well as variation in the position of the gap 16 among the corresponding rotational positions (see FIG. 7 and FIG. 8).

<1.3. Method of securing pierce nut>

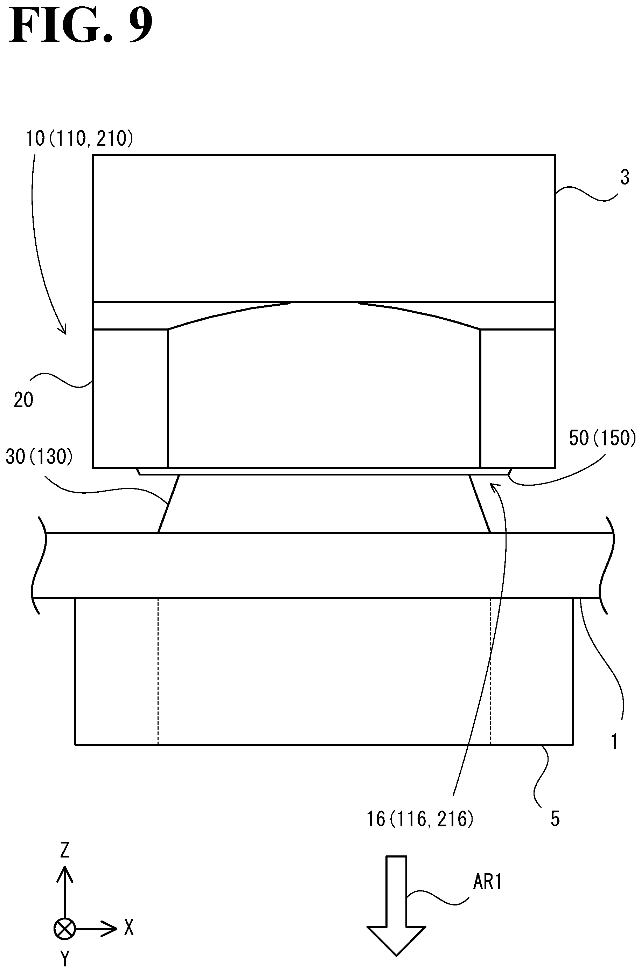

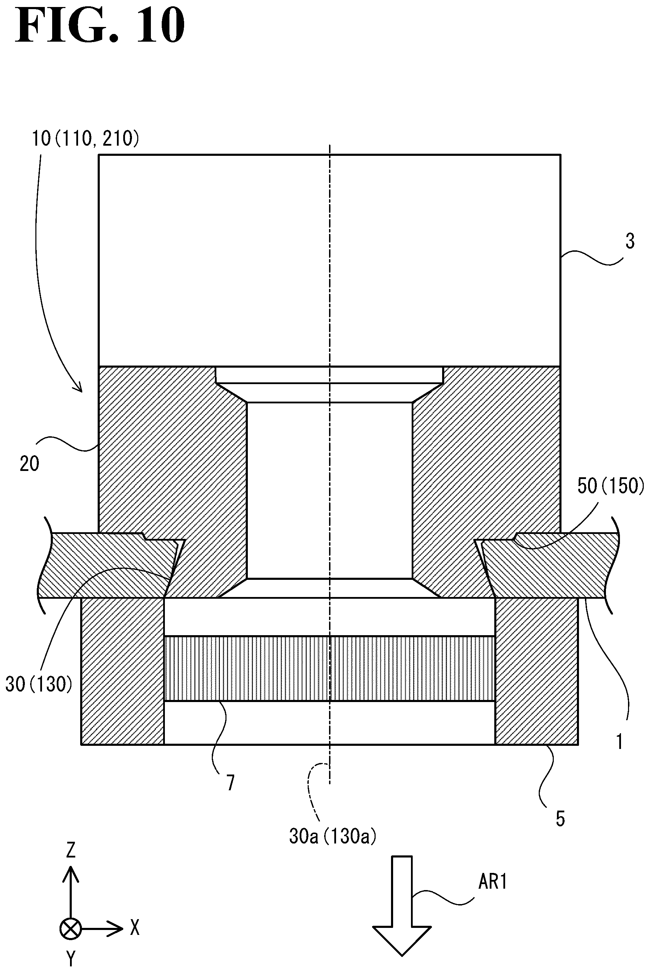

FIG. 9 and FIG. 10 are each a diagram illustrating a method of caulking the pierce nut 10 to a plate material 1 such as a steel plate (a method of securing the pierce nut 10). In FIG. 10, the plate material 1, a dice 5, removed scrap 7, and the pierce nut 10 are each illustrated in a cross-sectional shape in a cross section including the axis 30a.

The pierce nut 10 is secured through the following procedures. First of all, with the pierce nut 10 and the plate material 1 arranged between the punch 3 and the dice 5, a pressure is applied to the pierce nut 10 and the plate material 1 from the punch 3 and the dice 5. As a result, part of plate material 1 is removed as the removed scrap 7, resulting in a hole punched through the plate material 1.

When the pressure continues to be further applied, part of the plate material 1 is introduced into the gap 16 defined by the outer circumference surface 32 of the pilot portion 30 and the terrace surface 51 of the plateau portion 50. As a result, the plate material 1 is caulked with the pierce nut 10, and the pierce nut 10 is tightly attached to the plate material 1. Thus, the arrangement of the pilot portion 30 and the plateau portion 50 is an important factor determining the condition of the pierce nut 10 secured.

<1.4. Advantage of pierce nut according to first embodiment>

According to the pierce nut 10 of the first embodiment, the pilot portion 30 of the pierce nut 10 has a rectangular cross-sectional shape (first cross-sectional shape) on the first intersection plane PL11 intersecting the extending direction AR1 (see FIG. 5). The plateau portion 50 has an octagonal cross-sectional shape (second cross-sectional shape) on the second intersection plane PL12 intersecting the extending direction AR1.

With this configuration, the gap length 75 (75a to 75g) can vary among rotational positions around the axis 30a due to variation in the half-line 70 (70a to 70g) extending along the terrace surface 51 from the axis 30a of the pilot portion 30, among the rotational positions. Thus, the rotational resistance and the pullout resistance of the pierce nut secured to the plate material can be improved without forming a complex shape such as recesses and protrusions on the outer circumference surface 32 of the pilot portion 30.

According to the pierce nut 10 of the first embodiment, the outer circumference surface 32 of the pilot portion 30 and the terrace surface 51 of the plateau portion 50 form an inclination angle A1 (see FIG. 7 and FIG. 8) of 65 to 80 degrees (preferably, 70 to 75 degrees) on the cross section including the axis 30a of the pilot portion 30.

With this configuration, the gap 16 (recess portion) where the plate material 1 can be favorably guided to can be formed at the neck portion 15 between the plateau portion 50 and the pilot portion 30 can be formed. Thus, the rotational resistance and the pullout resistance of the pierce nut 10 secured to the plate material 1 can be further improved.

<2. Second embodiment>

Next, a second embodiment of the present invention will be described. The pierce nuts 10 and 110 of the first and the second embodiments have the same configuration except for a difference in configuration between pilot portions 30 and 130 and plateau portion 50 and 150 corresponding to each other. Thus, the difference will be mainly described below.

The components common to the pierce nuts 10 and 110 are denoted by the same reference numerals. The components with the same reference numerals are already described in the first embodiment, and thus will not be described in the present embodiment.

<2.1. Configuration of pierce nut>

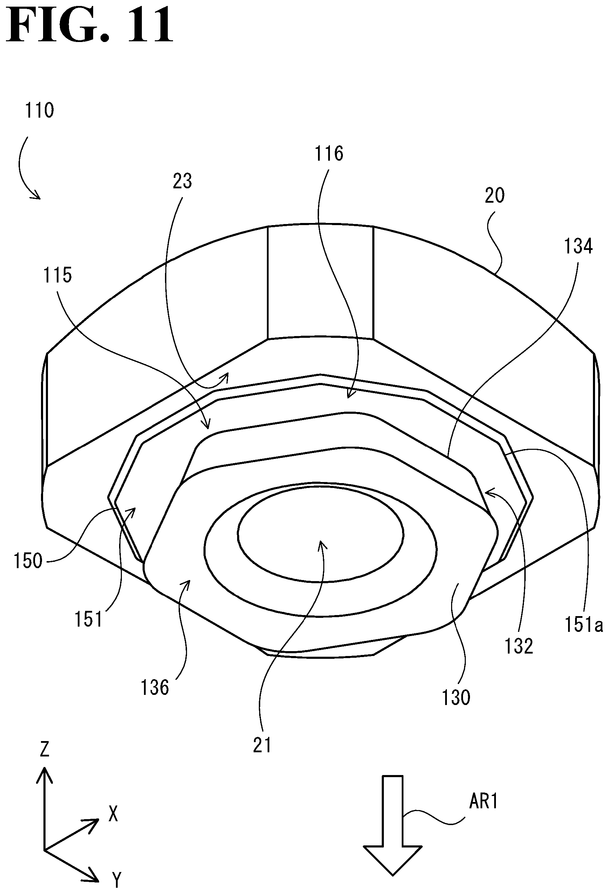

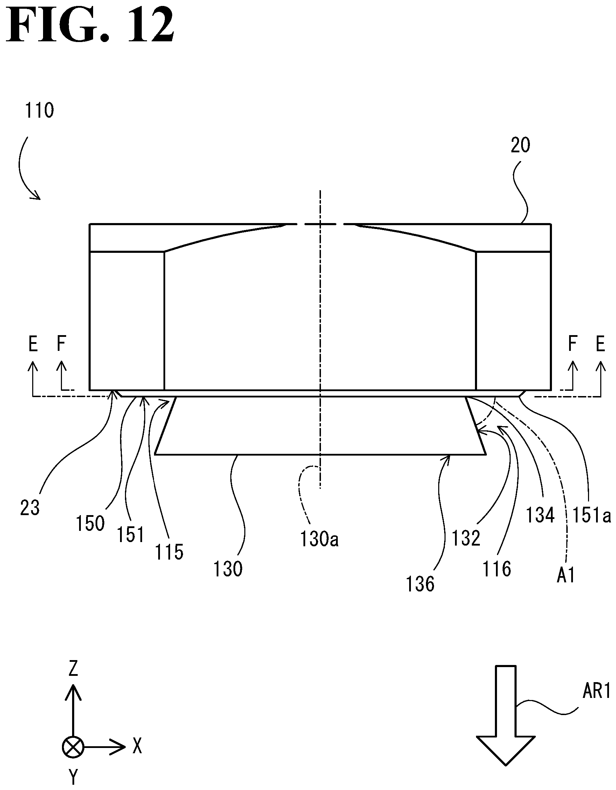

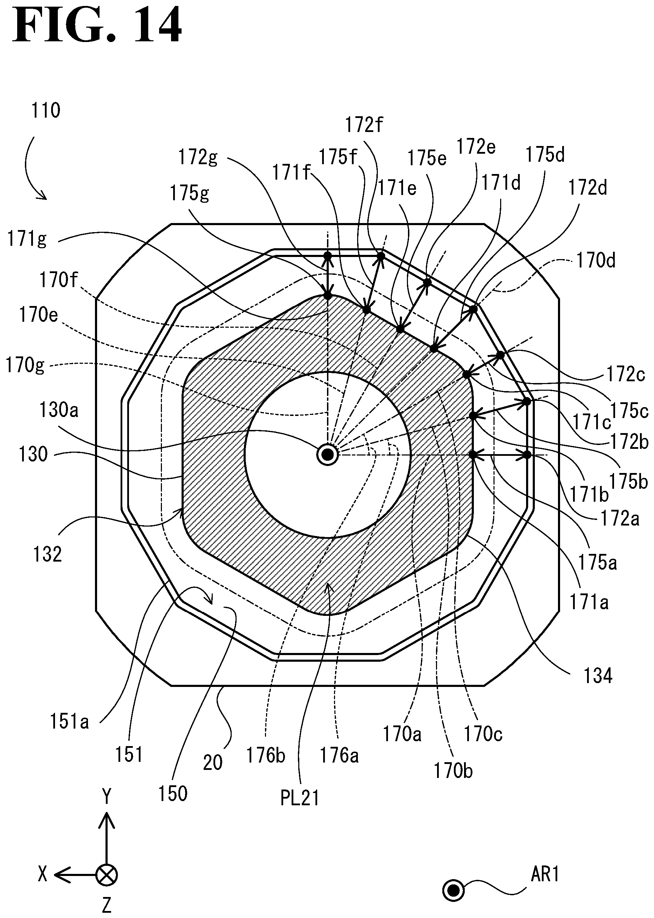

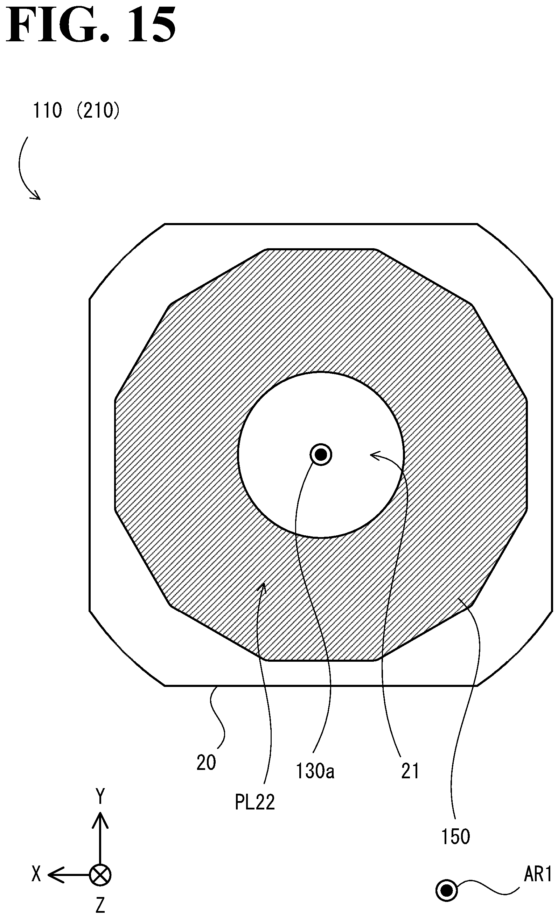

FIG. 11, FIG. 12, FIG. 3, and FIG. 13 are respectively a perspective view, a front view, a plan view, and a bottom view illustrating an example of a configuration of a pierce nut 110 of the second embodiment of the present invention. FIG. 14 is a cross-sectional view illustrating an example of a configuration of the pierce nut 110 taken and viewed along line E-E in FIG. 12. FIG. 15 is a cross-sectional view illustrating an example of a configuration of the pierce nut 110 taken and viewed along line F-F in FIG. 12.

Here, as is the case with the pierce nut 10, the pierce nut 110 is a nut secured to a plate material such as a steel plate in response to pressure applied. As illustrated in FIG. 11 to FIG. 15 and FIG. 3, the pierce nut 110 mainly includes the main body 20, a pilot portion 130, and a plateau portion 150.

The pilot portion 130 is a tool that can punch a hole in a plate material made of metal such as a steel plate in response to pressure applied in the direction of an axis 130a of the pilot portion 130, as is the case with the pilot portion 30 of the first embodiment. As illustrated in FIG. 11 and FIG. 12, the pilot portion 130 protrudes in the extending direction AR1, around the center of a terrace surface 151 of the plateau portion 150. As illustrated in FIG. 11, the through hole 21 is formed at the center of the pilot portion 130, as in the pilot portion 30 of the first embodiment.

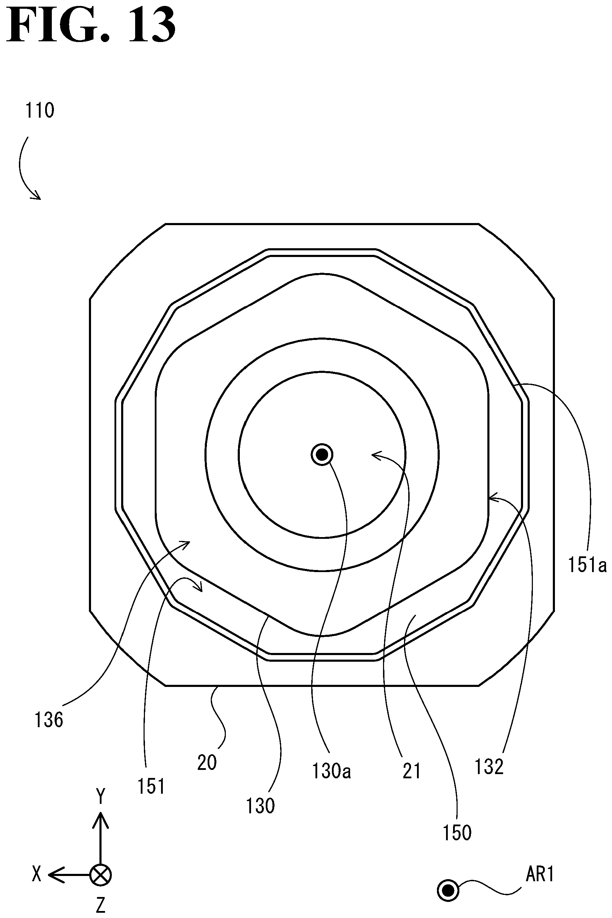

As illustrated in FIG. 11 to FIG. 13, the pilot portion 130 has an outer shape of a truncated hexagonal pyramid protruding outward from the main body 20. As illustrated in FIG. 14, for example, the pilot portion 130 has a hexagonal cross-sectional shape (first cross-sectional shape) on a first intersection plane PL21 intersecting the extending direction AR1. A two-dot chain line in FIG. 14 indicates an outline of a distal end surface 136 (see FIG. 13) of the pilot portion 130 in bottom view.

As illustrated in FIG. 11 and FIG. 12, an outer circumference length of the pilot portion 130 in a direction (a direction parallel to the first intersection plane PL21 in FIG. 14 for example) intersecting the extending direction AR1 increases with toward the distal end surface 136 of the pilot portion 130 from the terrace surface 151.

The plateau portion 150 has a shape of a plate thinner than the main body 20 and is provided around the center of the flat surface 23 of the main body 20. As illustrated in FIG. 11 and FIG. 12, the terrace surface 151 serving as the main surface of the plateau portion 150 is formed to be raised from the flat surface 23 of the main body 20. The through hole 21 is formed at the center of the plateau portion 150, as in the plateau portion 50 of the first embodiment.

As illustrated in FIG. 11 and FIG. 12, the plateau portion 150 is formed to surround an end portion (neck portion 115) of the pilot portion 30 on the flat surface 23 side. More specifically, as illustrated in FIG. 14, the pilot portion 130 intersecting the terrace surface 151 on the first intersection plane PL21 has a cross-sectional shape (third cross-sectional shape) surrounded by an outermost circumference 151a of the terrace surface 151.

With an outer circumference surface 132 of the pilot portion 130 and the terrace surface 151 of the plateau portion 150 thus connected through the neck portion 115 between the plateau portion 150 and the pilot portion 130, a gap 116 is formed around the neck portion 115.

As illustrated in FIG. 12, the terrace surface 151 is formed to be parallel to the flat surface 23 of the main body 20. As illustrated in FIG. 15, the plateau portion 150 has a dodecagonal cross-sectional shape (second cross-sectional shape) taken along a second intersection plane PL22, on the second intersection plane PL22 intersecting the extending direction AR1.

On a cross section including the axis 130a of the pilot portion 130, the inclination angle A1 (see FIG. 12) between the outer circumference surface 132 of the pilot portion 130 and the terrace surface 151 of the plateau portion 150 is 65 to 80 degrees (preferably, 70 to 75 degrees).

<2.2. Gap length at each rotational position>

Now, how a gap length 175 (175a to 175g) varies between rotational positions (for example, angles 176a and 176b in FIG. 14) will be described with reference to FIG. 14.

Here, as illustrated in FIG. 14,

(1) an intersecting point between a half-line 170 (170a to 170g) extending along the terrace surface 151 from the axis 130a of the pilot portion 130 and the outer circumference surface 132 of the pilot portion 130 is defined as a first intersecting point 171 (171a to 171g),

(2) an intersecting point between the half-line 170 (170a to 170g) and the outermost circumference 151a of the terrace surface 151 is defined as a second intersecting point 172 (172a to 172g),

(3) the length of a line segment connecting the first intersecting point 171 (171a to 171g) and the corresponding second intersecting point 172 (172a to 172g) is defined as the gap length 175 (175a to 175g),

(4) the length of a line segment connecting the axis 130a and the first intersecting point 171 (171a to 171g) is defined as a pilot diameter, and

(5) a half-line serving as a reference for a rotational position (angle) around the axis 130a is defined as a half-line 170a.

In this case, the half-lines 170 (170a to 170g) radially extend from the axis 130a. The half-line 170 (170a to 170g) varies among the rotational positions around the axis 130a, leading to variation in the gap length 175 (175a to 175g) among the rotational positions.

For example, as illustrated in FIG. 14, comparison between the gap length 175b on the half-line 170b at the rotational position corresponding to the angle 176a (that is, the angle formed between the half-line 170a and the half-line 170b) and the gap length 175c on the half-line 170c at the rotational position corresponding to the angle 176b, indicates that the gap length 175 decreases from the rotational position corresponding to the angle 176a to the rotational position corresponding to the angle 176b.

The gap lengths 175 (175a to 175g) at the respective rotational positions are alternatively observed as follows. Specifically, the half-line 170 (170a to 170g) varies among rotational positions around the axis 130a, leading to variation in the gap length 175 (175a to 175g) and pilot diameter among the rotational positions (see FIG. 14), as well as variation in position of the gap 116 among the corresponding rotational positions.

<2.3. Method of securing pierce nut>

FIG. 9 and FIG. 10 are each a diagram illustrating a method of caulking the pierce nut 110 to the plate material 1 such as a steel plate (a method of securing the pierce nut 110). In FIG. 10, the plate material 1, the dice 5, the removed scrap 7, and the pierce nut 110 are each illustrated in a cross-sectional shape in a cross section including the axis 130a.

The pierce nut 110 is secured through the following procedures. First of all, with the pierce nut 110 and the plate material 1 arranged between the punch 3 and the dice 5, a pressure is applied to the pierce nut 110 and the plate material 1 from the punch 3 and the dice 5. As a result, part of plate material 1 is removed as removed scrap 7, resulting in a hole punched through the plate material 1. With part of the plate material 1 introduced into the gap 116 defined by the outer circumference surface 132 of the pilot portion 130 and the terrace surface 151 of the plateau portion 150, the plate material 1 is caulked with the pierce nut 110, and the pierce nut 110 is tightly attached to the plate material 1.

Thus, the arrangement of the pilot portion 130 and the plateau portion 150 is an important factor determining the status of the pierce nut 110 secured, as in the first embodiment.

<2.4. Advantage of pierce nut according to second embodiment>

As described above, according to the pierce nut 110 of the second embodiment, the pilot portion 130 has a hexagonal cross-sectional shape (first cross-sectional shape) on the first intersection plane PL21 intersecting the extending direction AR1 (see FIG. 14). The plateau portion 150 has a dodecagonal cross-sectional shape (second cross-sectional shape) on the second intersection plane PL22 intersecting the extending direction AR1 (see FIG. 15).

With this configuration, the gap length 175 (175a to 175g) can vary among the rotational positions around the axis 130a due to variation in the half-line 170 (170a to 170g) extending along the terrace surface 151 from the axis 130a of the pilot portion 130, among the rotational positions. Thus, the rotational resistance and the pullout resistance of the pierce nut secured to the plate material can be improved without forming a complex shape such as recesses and protrusions on the outer circumference surface 132 of the pilot portion 130.

According to the pierce nut 110 of the second embodiment, the outer circumference surface 132 of the pilot portion 130 and the terrace surface 151 of the plateau portion 150 form the inclination angle A1 (see FIG. 12) of 65 to 80 degrees (preferably, 70 to 75 degrees) on the cross section including the axis 130a of the pilot portion 130.

With this configuration, the gap 116 (recess portion) where the plate material 1 can be favorably guided to can be formed at the neck portion 115 between the plateau portion 150 and the pilot portion 130. Thus, the rotational resistance and the pullout resistance of the pierce nut 110 secured to the plate material 1 can be further improved.

<3. Third embodiment>

Next, a third embodiment of the present invention will be described. A pierce nut 210 of the third embodiment mainly includes the main body 20 and the plateau portion 50 of the first embodiment, as well as the pilot portion 130 of the second embodiment.

The pierce nut 210 of the third embodiment is the same as the configuration of any one of the first and the second embodiments, except for a difference in the configuration of a neck portion 215 and a gap 216. Thus, the difference will be mainly described below.

The components of the pierce nut 210 common to the pierce nuts 10 and 110 are denoted by the same reference numerals. The components with the same reference numerals are already described in any one of the first and the second embodiments, and thus will not be described in the present embodiment.

<3.1. Configuration of pierce nut>

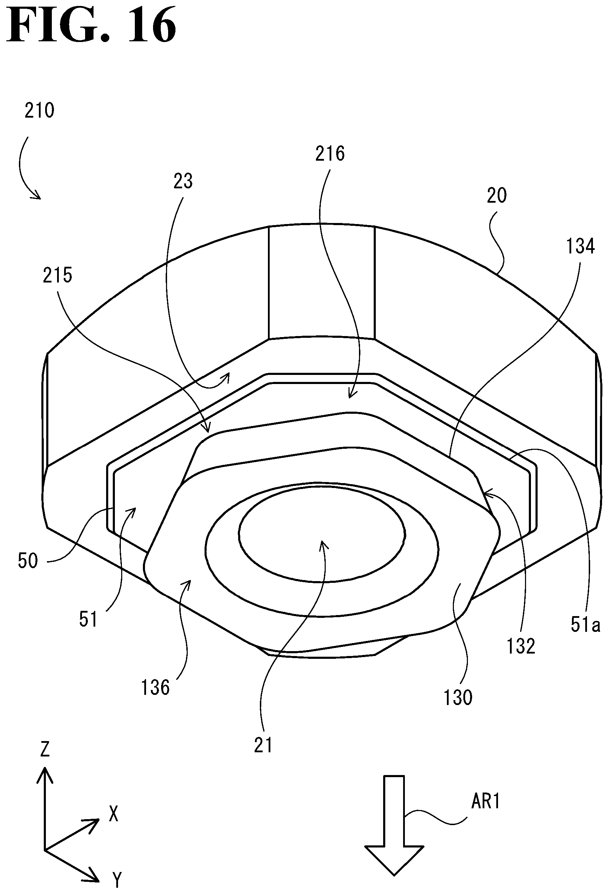

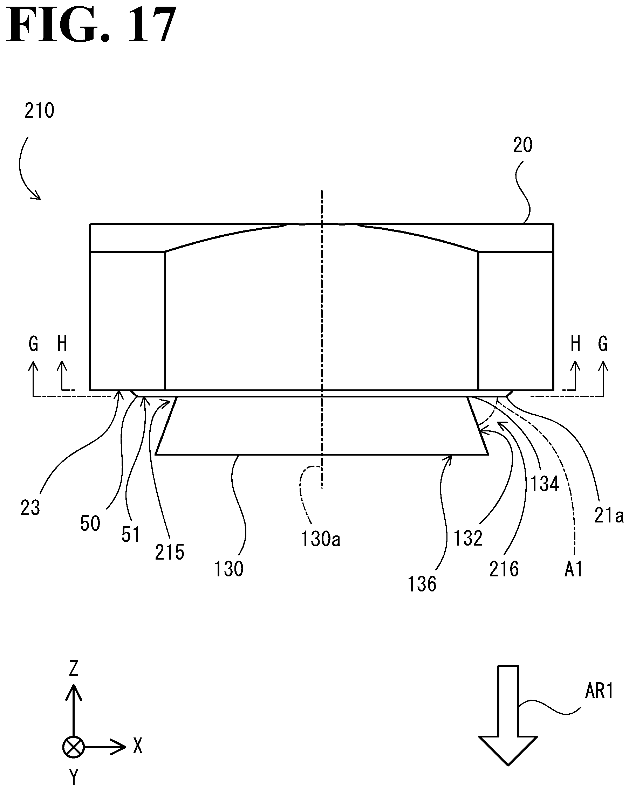

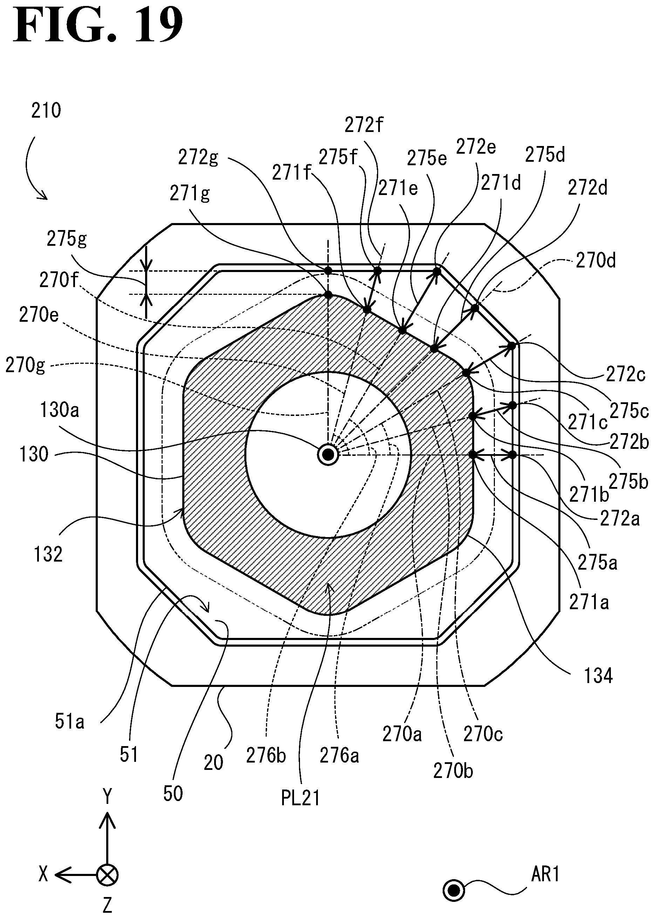

FIG. 16, FIG. 17, FIG. 3, and FIG. 18 are respectively a perspective view, a front view, a plan view, and a bottom view illustrating an example of a configuration of a pierce nut 210 of the third embodiment of the present invention. FIG. 19 is a cross-sectional view illustrating an example of a configuration of the pierce nut 210 taken and viewed along line G-G in FIG. 17. FIG. 6 is a cross-sectional view illustrating an example of a configuration of the pierce nut 210 taken and viewed along line H-H in FIG. 17.

Here, as is the case with the pierce nuts 10 and 110, the pierce nut 210 is a nut secured to a plate material such as a steel plate in response to pressure applied. As illustrated in FIG. 16 to FIG. 19, FIG. 3, and FIG. 6, the pierce nut 210 mainly includes the main body 20, the pilot portion 130, and the plateau portion 50.

As illustrated in FIG. 16 and FIG. 17, the pilot portion 130 protrudes in the extending direction AR1, around the center of the terrace surface 51 of the plateau portion 50. The plateau portion 50 is formed to surround an end portion (neck portion 215) of the pilot portion 130 on the flat surface 23 side. As illustrated in FIG. 16 and FIG. 17, the outer circumference surface 132 of the pilot portion 130 and the terrace surface 51 of the plateau portion 50 are connected through the neck portion 215 between the plateau portion 50 and the pilot portion 130, whereby a gap 216 is formed around the neck portion 215.

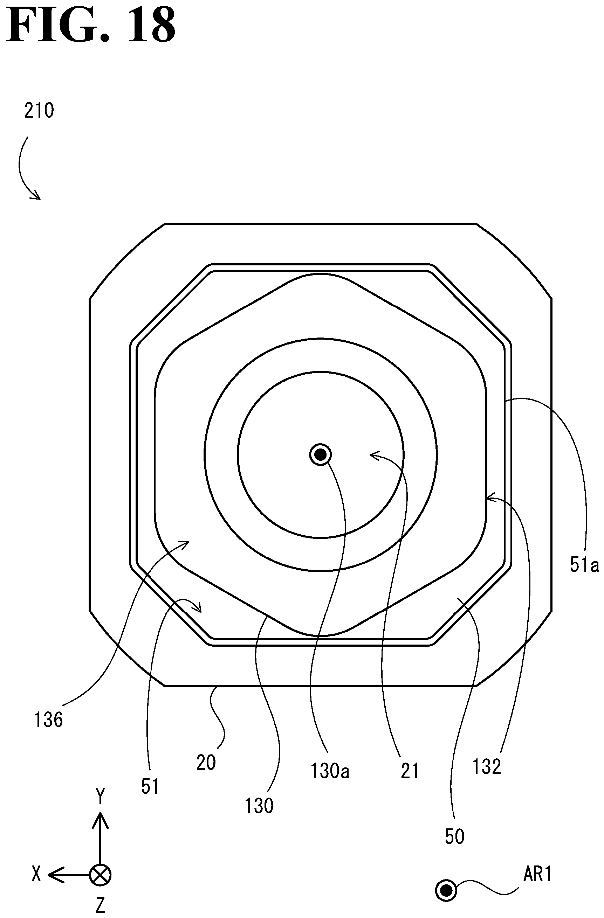

On a cross section including the axis 130a of the pilot portion 130, the inclination angle A1 (see FIG. 17) between the outer circumference surface 132 of the pilot portion 130 and the terrace surface 51 of the plateau portion 50 is 65 to 80 degrees (preferably, 70 to 75 degrees). A two-dot chain line in FIG. 19 indicates an outline of a distal end surface 136 (see FIG. 18) of the pilot portion 130 in bottom view.

<3.2. Gap length at each rotational position>

Now, how a gap length 275 (275a to 275g) varies between rotational positions (for example, angles 276a and 276b in FIG. 19) will be described with reference to FIG. 19.

Here, as illustrated in FIG. 19,

(1) an intersecting point between a half-line 270 (270a to 270g) extending along the terrace surface 51 from the axis 130a of the pilot portion 130 and the outer circumference surface 132 of the pilot portion 130 is defined as a first intersecting point 271 (271a to 271g),

(2) an intersecting point between the half-line 270 (270a to 270g) and the outermost circumference 51a of the terrace surface 51 is defined as a second intersecting point 272 (272a to 272g),

(3) the length of a line segment connecting the first intersecting point 271 (271a to 271g) and the corresponding second intersecting point 272 (272a to 272g) is defined as the gap length 275 (275a to 275g),

(4) the length of a line segment connecting the axis 130a and the first intersecting point 271 (271a to 271g) is defined as a pilot diameter, and

(5) a half-line serving as a reference for a rotational position (angle) around the axis 130a is defined as a half-line 270a.

In this case, the half-lines 270 (270a to 270g) radially extend from the axis 130a. The half-line 270 (270a to 270g) varies among the rotational positions around the axis 130a, leading to variation in the gap length 275 (275a to 275g) among the rotational positions.

For example, as illustrated in FIG. 19, comparison between the gap length 275c on the half-line 270c at the rotational position corresponding to the angle 276a (that is, the angle formed between the half-line 270a and the half-line 270c) and the gap length 275e on the half-line 270e at the rotational position corresponding to the angle 276b, indicates that the gap length 275e at the rotational position corresponding to the angle 276b is larger than the gap length 275c at the rotational position corresponding to the angle 276a.

The gap lengths 275 (275a to 275g) at the respective rotational positions are alternatively observed as follows. Specifically, the half-line 270 (270a to 270g) varies among the rotational positions around the axis 130a leading to variation in the gap length 275 (275a to 275g) and pilot diameter among the rotational positions (see FIG. 19), as well as variation in position of the gap 216 among the corresponding rotational positions.

<3.3. Method of securing pierce nut>

FIG. 9 and FIG. 10 are each a diagram illustrating a method of caulking the pierce nut 210 to the plate material 1 such as a steel plate (a method of securing the pierce nut 210). In FIG. 10, the plate material 1, the dice 5, the removed scrap 7, and the pierce nut 210 are each illustrated in a cross-sectional shape in a cross section including the axis 130a.

The pierce nut 210 is secured through the following procedures. First of all, with the pierce nut 210 and the plate material 1 arranged between the punch 3 and the dice 5, a pressure is applied to the pierce nut 210 and the plate material 1 from the punch 3 and the dice 5. As a result, part of plate material 1 is removed as removed scrap 7, resulting in a hole punched through the plate material 1. With part of the plate material 1 introduced into the gap 216 defined by the outer circumference surface 132 of the pilot portion 130 and the terrace surface 51 of the plateau portion 50, the plate material 1 is caulked with the pierce nut 210, and the pierce nut 210 is tightly attached to the plate material 1.

Thus, the arrangement of the pilot portion 130 and the plateau portion 150 is an important factor determining the status of the pierce nut 210 secured, as in the first and the second embodiments.

<3.4. Advantage of pierce nut according to third embodiment>

As described above, according to the pierce nut 210 of the third embodiment, the pilot portion 130 has a

hexagonal cross-sectional shape (first cross-sectional shape) on the first intersection plane PL21 intersecting the extending direction AR1 (see FIG. 19). The plateau portion 50 has an octagonal cross-sectional shape (second cross-sectional shape) on the second intersection plane PL12 intersecting the extending direction AR1 (see FIG. 6).

With this configuration, the gap length 275 (275a to 275g) can vary among the rotational positions around the axis 130a due to variation in the half-line 270 (270a to 270g) extending along the terrace surface 51 from the axis 130a of the pilot portion 130, among the rotational positions. Thus, the rotational resistance and the pullout resistance of the pierce nut secured to the plate material can be improved without forming a complex shape such as recesses and protrusions on the outer circumference surface 132 of the pilot portion 130.

According to the pierce nut 210 of the third embodiment, the outer circumference surface 132 of the pilot portion 130 and the terrace surface 51 of the plateau portion 50 form the inclination angle A1 (see FIG. 17) of 65 to 80 degrees (preferably, 70 to 75 degrees) on the cross section including the axis 130a of the pilot portion 130.

With this configuration, the gap 216 (recess portion) where the plate material 1 can be favorably guided to can be formed at the neck portion 215 between the plateau portion 50 and the pilot portion 130. Thus, the rotational resistance and the pullout resistance of the pierce nut 110 secured to the plate material 1 can be further improved.

<4. Modifications>

Despite the above description of the embodiments of the present invention, the present invention is not limited to the above embodiments, and can be modified in various ways.

(1) In the first embodiment, each of the cross-sectional shape (first cross-sectional shape: see FIG. 5) of the pilot portion 30 and the cross-sectional shape (second cross-sectional shape: see FIG. 6) of the plateau portion 50 is described as being line symmetrical about a straight line passing through the half-line 70a.

In the second embodiment, each of the cross-sectional shape (first cross-sectional shape: see FIG. 14) of the pilot portion 130 and the cross-sectional shape (second cross-sectional shape: see FIG. 15) of the plateau portion 150 is described as being line symmetrical about a straight line passing through the half-line 170a.

In the third embodiment, each of the cross-sectional shape (first cross-sectional shape: see FIG. 19) of the pilot portion 130 and the cross-sectional shape (second cross-sectional shape: see FIG. 6) of the plateau portion 50 is described as being line symmetrical about a straight line passing through the half-line 270a. However, the rotational positions of the pilot portion and the plateau portion are not limited to the description.

For example, in the first embodiment, the pilot portion 30 may rotate about the axis 30a from the position in FIG. 5, and the cross-sectional shape of the pilot portion 30 may not be line symmetrical about a straight line passing through the half-line 70a. Similarly, the plateau portion 50 may rotate about the axis 30a from the position in FIG. 6 and the cross-sectional shape of the plateau portion 50 may not be line symmetrical about a straight line passing through the half-line 70a.

Specifically, more generalized positional relationships between the pilot portion and the plateau portion are as follows, assuming that the axes of the pilot portion and the plateau portion match.

(1a) Each of the first cross-sectional shape of the pilot portion and the second cross-sectional shape of the plateau portion may be line symmetrical about the same straight line.
(1b) The second cross-sectional shape of the plateau portion may not be line symmetrical about a first straight line of interest about which the first cross-sectional shape of the pilot portion is line symmetrical.
(1c) Furthermore, the first cross-sectional shape of the pilot portion may not be line symmetrical about a second straight line of interest about which the second cross-sectional shape of the plateau portion is line symmetrical.

(2) In the first embodiment, the pilot portion 30 has a "rectangular" cross-sectional shape (first cross-sectional shape) on the first intersection plane PL11 intersecting the extending direction AR1 (see FIG. 5), and the plateau portion 50 has an "octagonal" cross-sectional shape (second cross-sectional shape) on the second intersection plane PL12 intersecting the extending direction AR1.

In the second embodiment, the pilot portion 130 has a "hexagonal" cross-sectional shape (first cross-sectional shape) on the first intersection plane PL21 intersecting the extending direction AR1 (see FIG. 14), and the plateau portion 150 has a "dodecagonal" cross-sectional shape (second cross-sectional shape) on the second intersection plane PL22 intersecting the extending direction AR1.

Furthermore, in the third embodiment, the pilot portion 130 has a "hexagonal" cross-sectional shape (first cross-sectional shape) on the first intersection plane PL21 intersecting the extending direction AR1 (see FIG. 19), and the plateau portion 50 has an "octagonal" cross-sectional shape (second cross-sectional shape) on the second intersection plane PL12 intersecting the extending direction AR1. However, these should not be construed in a limiting sense.

(2a) For example, on the first intersection plane intersecting the extending direction AR1, the pilot portion may have a first cross-sectional shape with n corners, n being a natural number that is equal to or larger than 4, and on the second intersection plane intersecting the extending direction AR1, the plateau portion may have a second cross-sectional shape with m corners, m being a natural number that is equal to or larger than 5 and is different from n.

(2b) Furthermore, m and n described above may be set to satisfy Formula (1).

$$m = 2n \ \dots \ (1)$$

(Explanation of reference numerals)

10,110,210 pierce nut
15,115,215 neck portion
16,116,216 gap
20 main body
23 flat surface
30,130 pilot portion
30a,130a axis
32,132 outer circumference surface
34,134 outer circumference line
36,136 distal end surface
50,150 plateau portion
51,151 terrace surface
51a,151a outermost circumference
70(70a-70g), 170(170a-170g), 270(270a-270g) half-line
71(71a-71g), 171(171a-171g), 271(271a-271g) first intersecting point
72(72a-72g), 172(172a-172g), 272(272a-272g) second intersecting point
75(70a-75g), 175(175a-175g), 275(275a-275g) gap length
76a,76b,176a,176b,276a,2776b angle
A1 inclination angle
AR1 extending direction
PL11,PL21 first intersection plane
PL12,PL22 second intersection plane

**Claims**

1. A pierce nut comprising:

   (a) a main body;
   (b) a plateau portion that is provided around a center of a flat surface of the main body and has a thin-plate shape; and
   (c) a pilot portion that protrudes in an extending direction , around a center of a terrace surface of the plateau portion , wherein

the terrace surface of the plateau portion is formed to be raised from the flat surface ,
a gap is formed around a neck portion between the plateau portion and the pilot portion , due to connection between an outer circumference surface of the pilot portion and the terrace surface of the plateau portion through the neck portion,
on a first intersection plane intersecting the extending direction , the pilot portion has a first cross-sectional shape with n corners, n being a natural number that is equal to or larger than 4,
on a second intersection plane intersecting the extending direction , the plateau portion has a second cross-sectional shape with m corners, m being a natural number that is equal to or larger than 5 and is different from n,
the pilot portion has an outer circumference line on the first intersection plane , with a length of the outer circumference line being longer on the first intersection plane closer to a distal end surface of the pilot portion and farther from the terrace surface , and with

   (i) an intersecting point between a half-line extending along the terrace surface from the axis of the pilot portion and the outer circumference surface defined as a first intersecting point ,
   (ii) an intersecting point between the half-line and an outermost circumference of the terrace surface defined as a second intersecting point , and
   (iii) a length of a line segment connecting the first intersecting point and the second intersecting point defined as a gap length ,

the half-line varies among rotational positions around the axis leading to variation in the gap length among the rotational positions.

2. A pierce nut comprising:

   (a) a main body;
   (b) a plateau portion that is provided around a center of a flat surface of the main body and has a thin-plate shape; and
   (c) a pilot portion that protrudes in an extending direction , around a center of a terrace surface of the plateau portion , wherein

   the terrace surface of the plateau portion is formed to be raised from the flat surface ,

a gap is formed around a neck portion between the plateau portion and the pilot portion , due to connection between an outer circumference surface of the pilot portion and the terrace surface of the plateau portion through the neck portion,

on a first intersection plane intersecting the extending direction , the pilot portion has a first cross-sectional shape with n corners, n being a natural number that is equal to or larger than 4,

on a second intersection plane intersecting the extending direction , the plateau portion has a second cross-sectional shape with m corners, m being a natural number that is equal to or larger than 5 and different from n,

the pilot portion has an outer circumference line on the first intersection plane , with a length of the outer circumference line being longer on the first intersection plane closer to a distal end surface ) of the pilot portion and farther from the terrace surface , and with

> (i) an intersecting point between a half-line extending along the terrace surface from the axis of the pilot portion and the outer circumference surface defined as a first intersecting point ,
> (ii) an intersecting point between the half-line and an outermost circumference of the terrace surface defined as a second intersecting point ,
> (iii) a length of a line segment connecting the first intersecting point and the second intersecting point defined as the gap length , and
> (iv) a length of a line segment connecting the axis and the first intersecting point defined as a pilot diameter, and

the half-line varies among rotational positions around the axis leading to variation in the gap length and the pilot diameter among the rotational positions, as well as a change in position of the gap among the corresponding rotational positions.

3. A pierce nut comprising:

> (a) a main body;
> (b) a plateau portion that is provided around a center of a flat surface of the main body and has a thin-plate shape; and
> (c) a pilot portion that protrudes in an extending direction , around a center of a terrace surface of the plateau portion , wherein

the terrace surface of the plateau portion is formed to be raised from the flat surface ,

a gap is formed around a neck portion , due to connection between an outer circumference surface of the pilot portion and the terrace surface of the plateau portion through the neck portion between the plateau portion and the pilot portion,

on a first intersection plane intersecting the extending direction , the pilot portion has a first cross-sectional shape with n corners, n being a natural number that is equal to or larger than 4,

on a second intersection plane intersecting the extending direction , the plateau portion has a second cross-sectional shape with m corners, m being a natural number that is equal to or larger than 5 and different from n,

the pilot portion has an outer circumference line on the first intersection plane , with a length of the outer circumference line being longer on the first intersection plane closer to a distal end surface of the pilot portion and farther from the terrace surface , and

the pilot portion intersecting the terrace surface has a third cross-sectional shape surrounded by an outermost circumference of the terrace surface .

4. The pierce nut according to any one of claims 1 to 3, wherein on a cross section including the axis of the pilot portion , the outer circumference surface and the terrace surface form an inclination angle of 65 to 80 degrees.

5. The pierce nut according to any one of claims 1 to 4, wherein the following formula (C1) is satisfied.

$$m = 2n \ldots (C1)$$

# FIG. 1

# FIG. 2

# FIG. 3

10 (110, 210)

C ←   C ←

⊗

20
21
30a (130a)

Y
↑
⊙ → X
Z

⊗⟋ AR1

EP 4 582 195 A1



# FIG. 4

# FIG. 5

# FIG. 6

# FIG. 7

# FIG. 8

10

20

23 50 51 15

30 30a 21 36 16 A1

34 51a

32

Z

Y ⊗ → X

AR1

# FIG. 9

# FIG. 10

10 (110, 210)

3

20

50 (150)

30 (130)

1

7

30a (130a)

5

Z
Y X

AR1

# FIG. 11

# FIG. 12

# FIG. 13

FIG. 14

# FIG. 15

110 (210)

20
PL22
130a
21
150
AR1

Y
X
Z

# FIG. 16

# FIG. 17

# FIG. 18

# FIG. 19

## INTERNATIONAL SEARCH REPORT

International application No.

**PCT/JP2023/031658**

| A. | CLASSIFICATION OF SUBJECT MATTER |
|---|---|

*B21D 39/00*(2006.01)i; *F16B 37/04*(2006.01)i
FI:   F16B37/04 E; B21D39/00 D

According to International Patent Classification (IPC) or to both national classification and IPC

| B. | FIELDS SEARCHED |
|---|---|

Minimum documentation searched (classification system followed by classification symbols)

F16B37/04; B21D39/00; B21J15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 07-151126 A (K M SEIKO KK) 13 June 1995 (1995-06-13) | 1-5 |
| A | JP 3228701 U (BOHSEI CAPTIVE CO., LTD.) 05 November 2020 (2020-11-05) | 1-5 |
| A | JP 2013-122283 A (PIAS SALES CO., LTD.) 20 June 2013 (2013-06-20) | 1-5 |
| A | JP 2009-530571 A (R B & W MANUFACTURING LLC) 27 August 2009 (2009-08-27) | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/031658**

| Patent document cited in search report | | | Publication date (day/month/year) | Patent family member(s) | | | Publication date (day/month/year) |
|---|---|---|---|---|---|---|---|
| JP | 07-151126 | A | 13 June 1995 | (Family: none) | | | |
| JP | 3228701 | U | 05 November 2020 | (Family: none) | | | |
| JP | 2013-122283 | A | 20 June 2013 | US | 2013/0149067 | A1 | |
| | | | | CN | 103161812 | A | |
| JP | 2009-530571 | A | 27 August 2009 | US | 2007/0224017 | A1 | |
| | | | | KR | 10-2008-0100457 | A | |
| | | | | CN | 101410634 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5300027 B